# EUROPEAN PATENT APPLICATION

(11) **EP 3 591 192 A1**
(43) Date of publication of application: **08.01.2020**
(21) Application number: 19184028.9
(22) Date of filing: 02.07.2019
(51) Int. Cl.: F02C 3/107, F02K 3/06

(54) **TURBOFAN ENGINE WITH AN EPICYCLIC TRANSMISSION**

(30) Priority: 02.07.2018 US 201816025038
(71) Applicant: United Technologies Corporation, Farmington, CT 06032 (US)
(72) Inventor: ADAMS, Paul R., Riviera Beach, FL Florida 33404 (US); MAGGE, Shankar S., South Windsor,, CT Connecticut 06074 (US); STAUBACH, Joseph B., Colchester, CT Connecticut 06415 (US); LORD, Wesley K., South Glastonbury, CT Connecticut 06073 (US); SCHWARZ, Frederick M, Glastonbury, CT Connecticut 06033 (US); SUCIU, Gabriel L., Glastonbury, CT Connecticut 06033 (US)
(74) Representative: Dehns

(57) **Abstract**

A turbofan engine (20) according to an example of the present disclosure includes, among other things, a fan (42) including a circumferential array of fan blades, a compressor in fluid communication with the fan, the compressor including a first compressor section (28) and a second compressor section (27), the second compressor section including a second compressor section inlet with a second compressor section inlet annulus area, a fan duct including a fan duct annulus area outboard of the second compressor section inlet, a shaft assembly (23) having a first portion (24) and a second portion (25), a turbine in fluid communication with the combustor, the turbine having a first turbine section (26) coupled to the first portion of the shaft assembly to drive the first compressor section, and a second turbine section (27) coupled to the second portion of the shaft assembly to drive the fan, an epicyclic transmission (46) coupled to the fan and rotatable by the second turbine section through the second portion of the shaft assembly to allow the second turbine to turn faster than the fan, wherein the second turbine section includes a maximum gas path radius and the fan blades include a maximum radius, and a ratio of the maximum gas path radius to the maximum radius of the fan blades is less than 0.6.

## Description

### BACKGROUND

The disclosure relates to turbofan engines. More particularly, the disclosure relates to low pressure turbine sections of turbofan engines which power the fans via a speed reduction mechanism.

There has been a trend toward increasing bypass ratio in gas turbine engines. This is discussed further below. There has generally been a correlation between certain characteristics of bypass and the diameter of the low pressure turbine section sections of turbofan engines.

### SUMMARY

A turbofan engine according to an example of the present disclosure includes a fan that has a circumferential array of fan blades and a compressor in fluid communication with the fan. The compressor has a first compressor section and a second compressor that has four stages. The second compressor has a greater number of stages than the first compressor. The second compressor section has a second compressor section inlet with a second compressor section inlet annulus area. A fan duct has a fan duct annulus area outboard of the second compressor section inlet. The ratio of the fan duct annulus area to the second compressor section inlet annulus area defines a bypass area ratio that is greater than or equal to 8.0. A combustor is in fluid communication with the compressor. A shaft assembly has a first portion and a second portion. A turbine is in fluid communication with the combustor. The turbine has a two-stage first turbine section coupled to the first portion of the shaft assembly to drive the first compressor section, and a four-stage second turbine section coupled to the second portion of the shaft assembly to drive the fan. Each of the second turbine section has blades and vanes, and a second turbine airfoil count is defined as the numerical count of all of the blades and vanes in the second turbine section. An epicyclic transmission is coupled to the fan and rotatable by the second turbine section through the second portion of the shaft assembly to allow the second turbine to turn faster than the fan. The second turbine airfoil count is below 1600. A ratio of the second turbine airfoil count to the bypass area ratio is less than 150. The second turbine section further includes a maximum gas path radius and the fan blades include a maximum radius, and a ratio of the maximum gas path radius to the maximum radius of the fan blades is less than 0.6.

In an embodiment, the second (or low pressure) turbine section is configured to drive the second compressor section via the epicyclic transmission. The rotation of the second turbine section may be tied to that of the fan, such that they rotate at the same speed.

An embodiment of any of the foregoing embodiments includes a fan case and vanes, the fan case encircling the fan and supported by the vanes.

In a further embodiment of any of the foregoing embodiments, the fan is a single fan, and each fan blade includes a platform and an outboard end having a free tip.

In a further embodiment of any of the foregoing embodiments, the epicyclic transmission is a planetary gearbox has a speed reduction ratio between 2:1 and 13:1 determined by the ratio of diameters within the planetary gearbox.

In a further embodiment of any of the foregoing embodiments, the ratio of the maximum gas path radius to the maximum radius of the fan blades is greater than 0.55.

A further embodiment of any of the foregoing embodiments includes an engine aft mount location configured to support an engine mount when the engine is mounted and react at least a thrust load of the engine, and an engine forward mount location.

In a further embodiment of any of the foregoing embodiments, the engine forward mount location is axially proximate to the epicyclic transmission.

In a further embodiment of any of the foregoing embodiments, the engine forward mount location engages with an intermediate case.

In a further embodiment of any of the foregoing embodiments, the engine aft mount location engages with an engine thrust case.

In a further embodiment of any of the foregoing embodiments, the engine aft mount location is located between the second turbine section and the first turbine section.

In a further embodiment of any of the foregoing embodiments, the engine aft mount location is located between the second turbine section and the first turbine section.

In a further embodiment of any of the foregoing embodiments, the second turbine section includes a plurality of blade stages interspersed with a plurality of vane stages, and each stage of the second turbine section includes a disk with a circumferential array of blades. Each blade has an airfoil extending from an inner diameter to an outer diameter. The inner diameter is associated with a platform and the outer diameter is associated with a shroud.

In a further embodiment of any of the foregoing embodiments, in at least one stage the shroud is integral with the airfoil.

In a further embodiment of any of the foregoing embodiments, the shroud includes outboard sealing ridges configured to seal with abradable seals.

In a further embodiment of any of the foregoing embodiments, the abradable seals include honeycomb.

A further embodiment of any of the foregoing embodiments includes a case associated with the second turbine section. The abradable seals are fixed to the case.

In a further embodiment of any of the foregoing embodiments, each stage of the second turbine section includes a disk, with a circumferential array of blades, each blade that has an airfoil extending from an inner diameter to an outer diameter. The inner diameter is associated with a platform and the outer diameter is unshrouded.

A further embodiment of any of the foregoing embodiments includes a stationary blade outer air seal, and a rotational gap between a tip of the airfoil and the stationary blade outer air seal.

In a further embodiment of any of the foregoing embodiments, each of the plurality of vane stages includes a vane. Each vane has an airfoil extending from an inner diameter to an outer diameter. The inner diameter is associated with a platform and the outer diameter is associated with a shroud.

A further embodiment of any of the foregoing embodiments includes a case associated with the second turbine section. The shroud is fixed to the case.

In a further embodiment of any of the foregoing embodiments, a hub-to-tip ratio (Ri:Ro) of the second turbine section is between 0.4 and 0.5 measured at the maximum Ro axial location in the second turbine section.

In a further embodiment of any of the foregoing embodiments, the bypass area ratio is less than or equal to 20. The epicyclic transmission is a planetary gearbox that has a speed reduction ratio between 2:1 and 13:1 determined by the ratio of diameters within the planetary gearbox, and the hub-to-tip ratio (Ri:Ro) is between 0.42-0.48.

In a further embodiment of any of the foregoing embodiments, the ratio of the maximum gas path radius to the maximum radius of the fan blades is greater than 0.55, and the ratio of the second turbine airfoil count to the bypass area ratio is between 120 and 140.

A turbofan engine according to an example of the present disclosure includes a fan that has a circumferential array of fan blades, and a compressor in fluid communication with the fan. The compressor has a second compressor section and a first compressor section. The second compressor section has a second compressor section inlet with a second compressor section inlet annulus area. A fan duct has a fan duct annulus area outboard of the second compressor section inlet. The ratio of the fan duct annulus area to the second compressor section inlet annulus area defines a bypass area ratio that is greater than 6.0. A combustor in fluid communication with the compressor. A shaft assembly has a first portion and a second portion. A turbine in fluid communication with the combustor. The turbine has a first turbine section coupled to the first portion of the shaft assembly to drive the first compressor section, and a second turbine section coupled to the second portion of the shaft assembly to drive the fan. Each of the second turbine section has blades and vanes, and a second turbine airfoil count defined as the numerical count of all of the blades and vanes in the second turbine section. An epicyclic transmission is coupled to the fan and rotatable by the second turbine section through the second portion of the shaft assembly to allow the second turbine to turn faster than the fan. The second turbine airfoil count is below 1600. A ratio of the second turbine airfoil count to the bypass area ratio is less than 150. The second turbine section further includes a maximum gas path radius and the fan blades include a maximum radius, and a ratio of the maximum gas path radius to the maximum radius of the fan blades is greater than or equal to 0.35. A hub-to-tip ratio (Ri:Ro) of the second turbine section is between 0.42-0.48 measured at the maximum Ro axial location in the second turbine section.

In a further embodiment of any of the foregoing embodiments, the ratio of the maximum gas path radius to the maximum radius of the fan blades is less than or equal to 0.6, the first turbine is a two-stage first turbine and the second turbine is a four-stage second turbine.

In a further embodiment of any of the foregoing embodiments, the first compressor is a nine-stage first compressor.

In a further embodiment of any of the foregoing embodiments, the second compressor is a four-stage second compressor.

In a further embodiment of any of the foregoing embodiments, the bypass area ratio is between 8.0 and 20, and the epicyclic transmission is a planetary gearbox having a speed reduction ratio between 2:1 and 13:1 determined by the ratio of diameters within the planetary gearbox.

In a further embodiment of any of the foregoing embodiments, the ratio of the maximum gas path radius to the maximum radius of the fan blades is greater than 0.55, and the ratio of the second turbine airfoil count to the bypass area ratio is between 120 and 140.

A further embodiment of any of the foregoing embodiments includes an engine intermediate case, that has an engine forward mount location proximate to the gearbox and configured to support an engine mount when the engine is mounted, and an engine thrust case that has an engine aft mount location configured to support an engine mount and react at least a thrust load when the engine is mounted. The engine aft mount location is located between the second turbine section and the first turbine section.

A turbofan engine according to an example of the present disclosure includes a fan that has a circumferential array of fan blades, and a compressor in fluid communication with the fan. The compressor has a first compressor section and a second compressor that has four stages. The second compressor has a greater number of stages than the first compressor. The second compressor section has a second compressor section inlet with a second compressor section inlet annulus area. A fan duct has a fan duct annulus area outboard of the second compressor section inlet. The ratio of the fan duct annulus area to the second compressor section inlet annulus area defines a bypass area ratio that is greater than or equal to 8.0. A combustor is in fluid communication with the compressor. A shaft assembly has a first portion and a second portion. A turbine is in fluid communication with the combustor. The turbine has a two-stage first turbine section coupled to the first portion of the shaft assembly to drive the first compressor section, and a four-stage second turbine section coupled to the second portion of the shaft assembly to drive the fan. Each of the second turbine section has blades and vanes, and a second turbine airfoil count defined as the numerical count of all of the blades and vanes in the second turbine section. An epicyclic transmission is coupled to the fan and rotatable by the second turbine section through the second portion of the shaft assembly to allow the second turbine to turn faster than the fan. The second turbine airfoil count is below 1600. A ratio of the second turbine airfoil count to the bypass area ratio is less than 150. The second turbine section further includes a maximum gas path radius and the fan blades that has a maximum radius, and a ratio of the maximum gas path radius to the maximum radius of the fan blades is less than 0.6.

A further embodiment of any of the foregoing embodiments includes a fan case and vanes, the fan case encircling the fan and supported by the vanes.

In a further embodiment of any of the foregoing embodiments, the fan is a single fan, and each fan blade includes a platform and an outboard end having a free tip.

In a further embodiment of any of the foregoing embodiments, the epicyclic transmission is a planetary gearbox having a speed reduction ratio between 2:1 and 13:1 determined by the ratio of diameters within the planetary gearbox.

In a further embodiment of any of the foregoing embodiments, the ratio of the maximum gas path radius to the maximum radius of the fan blades is greater than 0.55.

A further embodiment of any of the foregoing embodiments includes an engine aft mount location configured to support an engine mount when the engine is mounted and react at least a thrust load of the engine, and an engine forward mount location.

In a further embodiment of any of the foregoing embodiments, the engine forward mount location is axially proximate to the epicyclic transmission.

In a further embodiment of any of the foregoing embodiments, the engine forward mount location engages with an intermediate case.

In a further embodiment of any of the foregoing embodiments, the engine aft mount location engages with an engine thrust case.

In a further embodiment of any of the foregoing embodiments, the engine aft mount location is located between the second turbine section and the first turbine section.

In a further embodiment of any of the foregoing embodiments, the engine aft mount location is located between the second turbine section and the first turbine section.

In a further embodiment of any of the foregoing embodiments, the second turbine section includes a plurality of blade stages interspersed with a plurality of vane stages, and each stage of the second turbine section includes a disk with a circumferential array of blades. Each blade has an airfoil extending from an inner diameter to an outer diameter. The inner diameter is associated with a platform and the outer diameter is associated with a shroud.

In a further embodiment of any of the foregoing embodiments, in at least one stage the shroud is integral with the airfoil.

In a further embodiment of any of the foregoing embodiments, the shroud includes outboard sealing ridges configured to seal with abradable seals.

In a further embodiment of any of the foregoing embodiments, the abradable seals include honeycomb.

A further embodiment of any of the foregoing embodiments includes a case associated with the second turbine section. The abradable seals are fixed to the case.

In a further embodiment of any of the foregoing embodiments, each stage of the second turbine section includes a disk, with a circumferential array of blades, each blade that has an airfoil extending from an inner diameter to an outer diameter. The inner diameter is associated with a platform and the outer diameter is unshrouded.

A further embodiment of any of the foregoing embodiments includes a stationary blade outer air seal, and a rotational gap between a tip of the airfoil and the stationary blade outer air seal.

In a further embodiment of any of the foregoing embodiments, each of the plurality of vane stages includes a vane, each vane has an airfoil extending from an inner diameter to an outer diameter. The inner diameter is associated with a platform and the outer diameter is associated with a shroud.

A further embodiment of any of the foregoing embodiments includes a case associated with the second turbine section, wherein the shroud is fixed to the case.

In a further embodiment of any of the foregoing embodiments, a hub-to-tip ratio (Ri:Ro) of the second turbine section is between 0.4 and 0.5 measured at the maximum Ro axial location in the second turbine section.

In a further embodiment of any of the foregoing embodiments, the bypass area ratio is less than or equal to 20, the epicyclic transmission is a planetary gearbox having a speed reduction ratio between 2:1 and 13:1 determined by the ratio of diameters within the planetary gearbox, and the hub-to-tip ratio (Ri:Ro) is between 0.42-0.48.

In a further embodiment of any of the foregoing embodiments, the ratio of the maximum gas path radius to the maximum radius of the fan blades is greater than 0.55, and the ratio of the second turbine airfoil count to the bypass area ratio is between 120 and 140.

A turbofan engine according to an example of the present disclosure includes a fan that has a circumferential array of fan blades, and a compressor in fluid communication with the fan. The compressor has a second compressor section and a first compressor section. The second compressor section has a second compressor section inlet with a second compressor section inlet annulus area, and a fan duct that has a fan duct annulus area outboard of the second compressor section inlet. The ratio of the fan duct annulus area to the second compressor section inlet annulus area defines a bypass area ratio that is greater than 6.0. A combustor in fluid communication with the compressor. A shaft assembly has a first portion and a second portion. A turbine in fluid communication with the combustor. The turbine has a first turbine section coupled to the first portion of the shaft assembly to drive the first compressor section, and a second turbine section coupled to the second portion of the shaft assembly to drive the fan. Each of the second turbine section includes blades and vanes, and a second turbine airfoil count defined as the numerical count of all of the blades and vanes in the second turbine section. An epicyclic transmission is coupled to the fan and rotatable by the second turbine section through the second portion of the shaft assembly to allow the second turbine to turn faster than the fan. The second turbine airfoil count is below 1600. A ratio of the second turbine airfoil count to the bypass area ratio is less than 150. The second turbine section further includes a maximum gas path radius and the fan blades include a maximum radius, and a ratio of the maximum gas path radius to the maximum radius of the fan blades is greater than or equal to 0.35. A hub-to-tip ratio (Ri:Ro) of the second turbine section is between 0.42-0.48 measured at the maximum Ro axial location in the second turbine section.

In a further embodiment of any of the foregoing embodiments, the ratio of the maximum gas path radius to the maximum radius of the fan blades is less than or equal to 0.6, the first turbine is a two-stage first turbine and the second turbine is a four-stage second turbine.

In a further embodiment of any of the foregoing embodiments, the first compressor is a nine-stage first compressor.

In a further embodiment of any of the foregoing embodiments, the second compressor is a four-stage second compressor.

In a further embodiment of any of the foregoing embodiments, the bypass area ratio is between 8.0 and 20, and the epicyclic transmission is a planetary gearbox having a speed reduction ratio between 2:1 and 13:1 determined by the ratio of diameters within the planetary gearbox.

In a further embodiment of any of the foregoing embodiments, the ratio of the maximum gas path radius to the maximum radius of the fan blades is greater than 0.55, and the ratio of the second turbine airfoil count to the bypass area ratio is between 120 and 140.

A further embodiment of any of the foregoing embodiments includes an engine intermediate case that has an engine forward mount location proximate to the gearbox and configured to support an engine mount when the engine is mounted, and an engine thrust case that has an engine aft mount location configured to support an engine mount and react at least a thrust load when the engine is mounted. The engine aft mount location is located between the second turbine section and the first turbine section.

One aspect of the disclosure involves a turbofan engine having an engine case and a gaspath through the engine case. A fan has a circumferential array of fan blades. The engine further has a compressor in fluid communication with the fan, a combustor in fluid communication with the compressor, a turbine in fluid communication with the combustor, wherein the turbine includes a low pressure turbine section having 3 to 6 blade stages. A speed reduction mechanism couples the low pressure turbine section to the fan. A bypass area ratio is greater than about 6.0. A ratio of the total number of airfoils in the low pressure turbine section divided by the bypass area ratio is less than about 170, said low pressure turbine section airfoil count being the total number of blade airfoils and vane airfoils of the low pressure turbine section.

In additional or alternative embodiments of any of the foregoing embodiments, the bypass area ratio may be greater than about 8.0 or may be between about 8.0 and about 20.0.

In additional or alternative embodiments of any of the foregoing embodiments, a fan case may encircle the fan blades radially outboard of the engine case.

In additional or alternative embodiments of any of the foregoing embodiments, the compressor may comprise a low pressure compressor section and a high pressure compressor section.

In additional or alternative embodiments of any of the foregoing embodiments, the blades of the low pressure compressor section and low pressure turbine section may share a low shaft.

In additional or alternative embodiments of any of the foregoing embodiments, the high pressure compressor section and a high pressure turbine section of the turbine may share a high shaft.

In additional or alternative embodiments of any of the foregoing embodiments, there are no additional compressor or turbine sections.

In additional or alternative embodiments of any of the foregoing embodiments, the speed reduction mechanism may comprise an epicyclic transmission coupling the low speed shaft to a fan shaft to drive the fan with a speed reduction.

In additional or alternative embodiments of any of the foregoing embodiments, the low pressure turbine section may have an exemplary 2 to 6 blade stages or 2 to 3 blade stages.

In additional or alternative embodiments of any of the foregoing embodiments, a hub-to-tip ratio (R*i*:R*o*) of the low pressure turbine section may be between about 0.4 and about 0.5 measured at the maximum Ro axial location in the low pressure turbine section.

In additional or alternative embodiments of any of the foregoing embodiments, a ratio of maximum gaspath radius along the low pressure turbine section to maximum radius of the fan may be less than about 0.55, or less than about 0.50, or between about 0.35 and about 0.50.

In additional or alternative embodiments of any of the foregoing embodiments, the ratio of low pressure turbine section airfoil count to bypass area ratio may be between about 10 and about 150.

In additional or alternative embodiments of any of the foregoing embodiments, the airfoil count of the low pressure turbine section may be below about 1600.

In additional or alternative embodiments of any of the foregoing embodiments, the engine may be in combination with a mounting arrangement (e.g., of an engine pylon) wherein an aft mount reacts at least a thrust load.

The details of one or more embodiments are set forth in the accompanying drawings and the description below. Other features, objects, and advantages will be apparent from the description and drawings, and from the claims.

### BRIEF DESCRIPTION OF THE DRAWINGS

Figure 1 is an axial sectional view of a turbofan engine.
Figure 2 is an axial sectional view of a low pressure turbine section of the engine of Figure 1.
Figure 3 is transverse sectional view of transmission of the engine of Figure 1.
Figure 4 shows another embodiment.
Figure 5 shows yet another embodiment.

Like reference numbers and designations in the various drawings indicate like elements.

### DETAILED DESCRIPTION

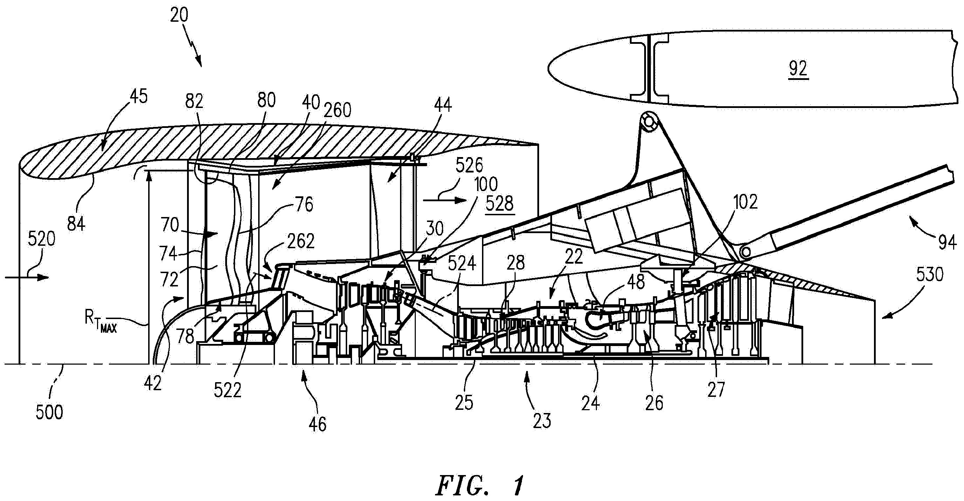

Figure 1 shows a turbofan engine 20 having a main housing (engine case) 22 containing a rotor shaft assembly 23. Via high 24 and low 25 shaft portions of the shaft assembly 23, a high pressure turbine section (gas generating turbine) 26 and a low pressure turbine section 27 respectively drive a high pressure compressor section 28 and a low pressure compressor section 30. As used herein, the high pressure turbine section experiences higher pressures that the low pressure turbine section. A low pressure turbine section is a section that powers a fan 42. Although a two-spool (plus fan) engine is shown, one of many alternative variations involves a three-spool (plus fan) engine wherein an intermediate spool comprises an intermediate pressure compressor between the low fan and high pressure compressor section and an intermediate pressure turbine between the high pressure turbine section and low pressure turbine section.

The engine extends along a longitudinal axis 500 from a fore end to an aft end. Adjacent the fore end, a shroud (fan case) 40 encircles the fan 42 and is supported by vanes 44. An aerodynamic nacelle around the fan case is shown and an aerodynamic nacelle 45 around the engine case is shown.

The low shaft portion 25 of the rotor shaft assembly 23 drives the fan 42 through a speed reduction mechanism 46. An exemplary speed reduction mechanism is an epicyclic transmission, namely a star or planetary gear system.

The low shaft portion 25 may also drive the low pressure (or 'second') compressor section 30 via the speed reduction mechanism 46, the speed reduction mechanism 46 being positioned aft of the low pressure compressor section 30. In such an embodiment, the rotation of the low pressure compressor section 30 is tied to the rotation of the fan 22, so as to rotate at a common speed. Alternatively, the low shaft portion 25 may drive the low pressure compressor section 30 directly (i.e. not via the speed reduction mechanism 46). Exemplary embodiments are described below which include a low pressure compressor section driven directly by the low shaft portion, but it will be understood that the other features of those embodiments can also be applied to arrangements having a low pressure compressor section driven via a speed reduction mechanism while falling within the scope of the present disclosure.

As is discussed further below, an inlet airflow 520 entering the nacelle is divided into a portion 522 passing along a core flowpath 524 and a bypass portion 526 passing along a bypass flowpath 528. With the exception of diversions such as cooling air, etc., flow along the core flowpath sequentially passes through the low pressure compressor section, high pressure compressor section, a combustor 48, the high pressure turbine section, and the low pressure turbine section before exiting from an outlet 530.

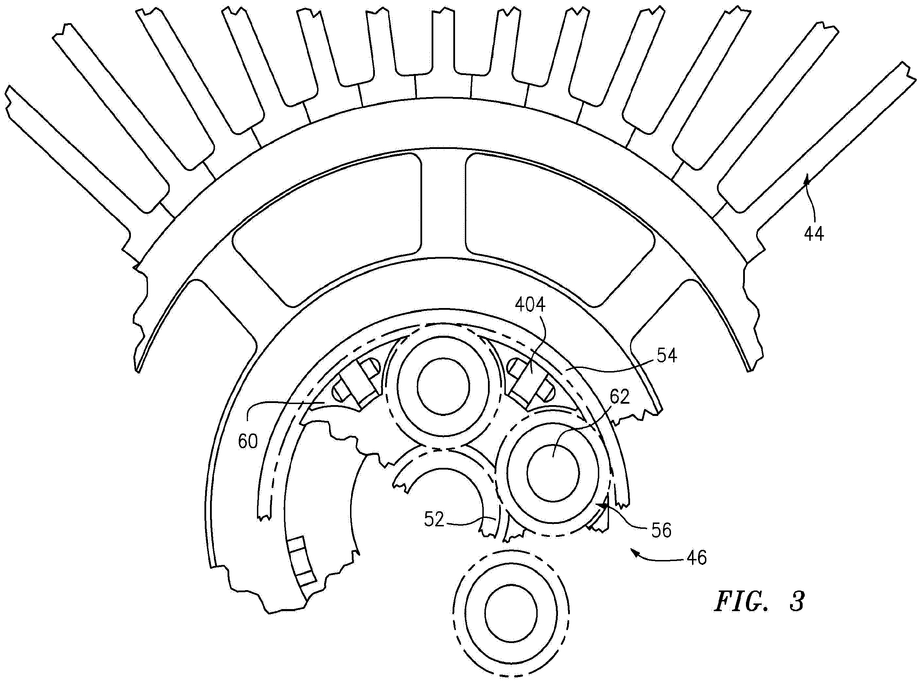

Figure 3 schematically shows details of the transmission 46. A forward end of the low shaft 25 is coupled to a sun gear 52 (or other high speed input to the speed reduction mechanism). The externally-toothed sun gear 52 is encircled by a number of externally-toothed star gears 56 and an internally-toothed ring gear 54. The exemplary ring gear is coupled to the fan to rotate with the fan as a unit.

The star gears 56 are positioned between and enmeshed with the sun gear and ring gear. A cage or star carrier assembly 60 carries the star gears via associated journals 62. The exemplary star carrier is substantially irrotatably mounted relative via fingers 404 to the case 22.

Another transmission/gearbox combination has the star carrier connected to the fan and the ring is fixed to the fixed structure (case) is possible and such is commonly referred to as a planetary gearbox.

The speed reduction ratio is determined by the ratio of diameters within the gearbox. An exemplary reduction is between about 2:1 and about 13:1.

The exemplary fan (Figure 1) comprises a circumferential array of blades 70. Each blade comprises an airfoil 72 having a leading edge 74 and a trailing edge 76 and extending from an inboard end 78 at a platform to an outboard end 80 (i.e., a free tip). The outboard end 80 is in close facing proximity to a rub strip 82 along an interior surface 84 of the nacelle and fan case.

To mount the engine to the aircraft wing 92, a pylon 94 is mounted to the fan case and/or to the other engine cases. The exemplary pylon 94 may be as disclosed in US Patent Application Ser. No. 11/832,107 (US2009/0056343A1). The pylon comprises a forward mount 100 and an aft/rear mount 102. The forward mount may engage the engine intermediate case (IMC) and the aft mount may engage the engine thrust case. The aft mount reacts at least a thrust load of the engine.

To reduce aircraft fuel burn with turbofans, it is desirable to produce a low pressure turbine with the highest efficiency and lowest weight possible. Further, there are considerations of small size (especially radial size) that benefit the aerodynamic shape of the engine cowling and allow room for packaging engine subsystems.

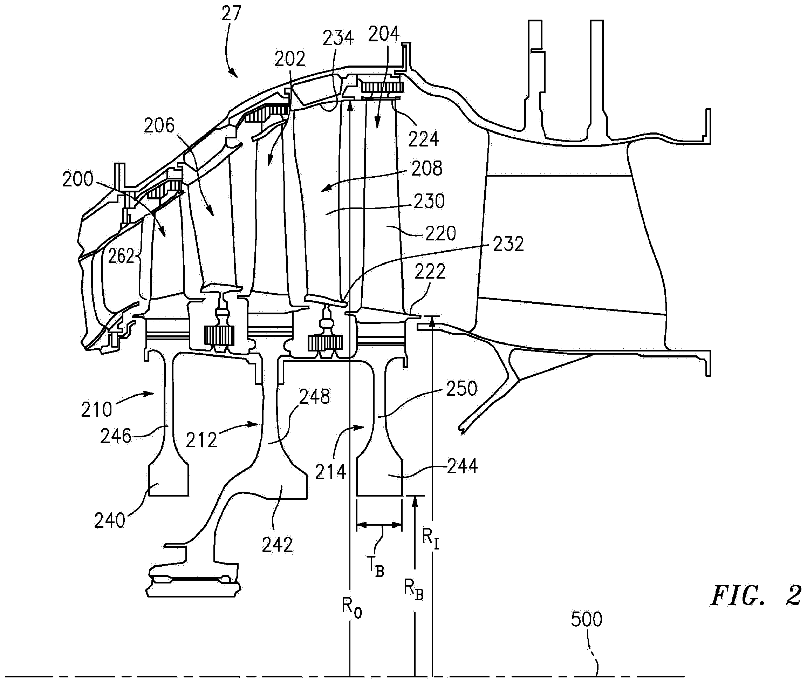

Figure 2 shows the low pressure turbine section 27 as comprising an exemplary three blade stages 200, 202, 204. An exemplary blade stage count is 2-6, more narrowly, 2-4, or 2-3, 3-5, or 3-4. Interspersed between the blade stages are vane stages 206 and 208. Each exemplary blade stage comprises a disk 210, 212, and 214, respectively. A circumferential array of blades extends from peripheries of each of the disks. Each exemplary blade comprises an airfoil 220 extending from an inner diameter (ID) platform 222 to an outer diameter (OD) shroud 224 (shown integral with the airfoil).

An alternative may be an unshrouded blade with a rotational gap between the tip of the blade and a stationary blade outer air seal (BOAS). Each exemplary shroud 224 has outboard sealing ridges which seal with abradable seals (e.g., honeycomb) fixed to the case. The exemplary vanes in stages 206 and 208 include airfoils 230 extending from ID platforms 232 to OD shrouds 234. The exemplary OD shrouds 234 are directly mounted to the case. The exemplary platforms 232 carry seals for sealing with inter-disk knife edges protruding outwardly from inter-disk spacers which may be separate from the adjacent disks or unitarily formed with one of the adjacent disks.

Each exemplary disk 210, 212, 214 comprises an enlarged central annular protuberance or "bore" 240, 242, 244 and a thinner radial web 246, 248, 250 extending radially outboard from the bore. The bore imparts structural strength allowing the disk to withstand centrifugal loading which the disk would otherwise be unable to withstand.

A turbofan engine is characterized by its bypass ratio (mass flow ratio of air bypassing the core to air passing through the core) and the geometric bypass area ratio (ratio of fan duct annulus area outside/outboard of the low pressure compressor section inlet (i.e., at location 260 in Figure 1) to low pressure compressor section inlet annulus area (i.e., at location 262 in Figure 2). High bypass engines typically have bypass area ratio of at least four. There has been a correlation between increased bypass area ratio and increased low pressure turbine section radius and low pressure turbine section airfoil count. As is discussed below, this correlation may be broken by having an engine with relatively high bypass area ratio and relatively low turbine size.

In some embodiments, the engine 20 bypass ratio is greater than or equal to about six, with an example embodiment being greater than or equal to about ten, the speed reduction mechanism 46 defines a gear reduction ratio of greater than about 2.3 and the low pressure turbine section 27 has a pressure ratio that is greater than about five. In one further non-limiting embodiment, the low pressure turbine section 27 has a pressure ratio that is greater than about five and less than about ten. In one disclosed embodiment, the engine 20 bypass ratio is greater than about ten, the fan diameter is significantly larger than that of the low pressure compressor section 30, and the low pressure turbine section 27 has a pressure ratio that is greater than about five. Low pressure turbine section 27 pressure ratio is pressure measured prior to inlet of low pressure turbine section 27 as related to the pressure at the outlet of the low pressure turbine section 27 prior to an exhaust nozzle. The low pressure turbine section 27 can have a pressure ratio that is less than or equal to about 20.0, such as between about 10.0 and about 15.0. In another embodiment, the engine 20 has a bypass ratio less than or equal to about 25.0, such as between about 15.0 and about 20.0, or between about 15.0 and 18.0. The gear reduction ratio can be less than about 5.0, or less than about 4.0, for example, or between about 4.0 and 5.0.

The fan 42 is designed for a particular flight condition -- typically cruise at about 0.8 Mach and about 35,000 feet (10,668m). The flight condition of 0.8 Mach and 35,000 ft (10,668m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.50, or more narrowly less than about 1.45, or between about 1.3 and 1.45, or between about 1.30 and 1.38. In embodiments, the low fan pressure ratio is greater than or equal to about 1.1 or about 1.2. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 m/s). Further, low corrected fan tip speed according to one non-limiting embodiment is greater than about 1000 ft / second (304.8 m/s).

By employing a speed reduction mechanism (e.g., a transmission) to allow the low pressure turbine section to turn very fast relative to the fan (and optionally the low pressure compressor section) and by employing low pressure turbine section design features for high speed, it is possible to create a compact turbine module (e.g., while producing the same amount of thrust and increasing bypass area ratio). The exemplary transmission is an epicyclic transmission. Alternative transmissions include composite belt transmissions, metal chain belt transmissions, fluidic transmissions, and electric means (e.g., a motor/generator set where the turbine turns a generator providing electricity to an electric motor which drives the fan).

Compactness of the turbine is characterized in several ways. Along the compressor and turbine sections, the core gaspath extends from an inboard boundary (e.g., at blade hubs or outboard surfaces of platforms of associated blades and vanes) to an outboard boundary (e.g., at blade tips and inboard surfaces of blade outer air seals for unshrouded blade tips and at inboard surfaces of OD shrouds of shrouded blade tips and at inboard surfaces of OD shrouds of the vanes). These boundaries may be characterized by radii R_{I} and R_{O}, respectively, which vary along the length of the engine.

For low pressure turbine radial compactness, there may be a relatively high ratio of radial span (R_{O}-R_{I}) to radius (R_{O} or R_{I}). Radial compactness may also be expressed in the hub-to-tip ratio (R_{I}:R_{O}). These may be measured at the maximum R_{O} location in the low pressure turbine section. The exemplary compact low pressure turbine section has a hub-to-tip ratio close to about 0.5 (e.g., about 0.4-0.5 or about 0.42-0.48, with an exemplary about 0.46).

Another characteristic of low pressure turbine radial compactness is relative to the fan size. An exemplary fan size measurement is the maximum tip radius R_{Tmax}. of the fan blades. An exemplary ratio is the maximum R_{O} along the low pressure turbine section to R_{Tmax} of the fan blades. Exemplary values for this ratio are less than or equal to about 0.65, or more narrowly, less than or equal to about 0.6, above about 0.55, less than or equal to about 0.55 (e.g., about 0.35-0.55), less than about 0.50, or about 0.35-0.50.

To achieve compactness the designer may balance multiple physical phenomena to arrive at a system solution as defined by the low pressure turbine hub-to-tip ratio, the fan maximum tip radius to low pressure turbine maximum R_{O} ratio, the bypass area ratio, and the bypass area ratio to low pressure turbine airfoil count ratio. These concerns include, but are not limited to: a) aerodynamics within the low pressure turbine, b) low pressure turbine blade structural design, c) low pressure turbine disk structural design, and d) the shaft connecting the low pressure turbine to the low pressure compressor and speed reduction device between the low pressure compressor and fan or between the low pressure turbine section and low pressure compressor section. These physical phenomena may be balanced in order to achieve desirable performance, weight, and cost characteristics.

The addition of a speed reduction device between the fan and the low pressure turbine and/or the low pressure compressor creates a larger design space because the speed of the low pressure turbine is decoupled from the fan. This design space provides great design variables and new constraints that limit feasibility of a design with respect to physical phenomena. For example the designer can independently change the speed and flow area of the low pressure turbine to achieve optimal aerodynamic parameters defined by flow coefficient (axial flow velocity / wheel speed) and work coefficient (wheel speed / square root of work). However, this introduces structural constraints with respect blade stresses, disk size, material selection, etc.

In some examples, the designer can choose to make low pressure turbine section disk bores much thicker relative to prior art turbine bores and the bores may be at a much smaller radius R_{B}. This increases the amount of mass at less than a "self sustaining radius". Another means is to choose disk materials of greater strength than prior art such as the use of wrought powdered metal disks to allow for extremely high centrifugal blade pulls associated with the compactness.

Another variable in achieving compactness is to increase the structural parameter AN² which is the annulus area of the exit of the low pressure turbine divided by the low pressure turbine rpm squared at its redline or maximum speed. Relative to prior art turbines, which are greatly constrained by fan blade tip mach number, a very wide range of AN² values can be selected and optimized while accommodating such constraints as cost or a countering, unfavorable trend in low pressure turbine section shaft dynamics. In selecting the turbine speed (and thereby selecting the transmission speed ratio, one has to be mindful that at too high a gear ratio the low pressure turbine section shaft (low shaft) will become dynamically unstable.

The higher the design speed, the higher the gear ratio will be and the more massive the disks will become and the stronger the low pressure turbine section disk and blade material will have to be. All of these parameters can be varied simultaneously to change the weight of the turbine, its efficiency, its manufacturing cost, the degree of difficulty in packaging the low pressure turbine section in the core cowling and its durability. This is distinguished from a prior art direct drive configuration, where the high bypass area ratio can only be achieved by a large low pressure turbine section radius. Because that radius is so very large and, although the same variables (airfoil turning, disk size, blade materials, disk shape and materials, etc.) are theoretically available, as a practical matter economics and engine fuel burn considerations severely limit the designer's choice in these parameters.

Another characteristic of low pressure turbine section size is airfoil count (numerical count of all of the blades and vanes in the low pressure turbine). Airfoil metal angles can be selected such that airfoil count is low or extremely low relative to a direct drive turbine. In known prior art engines having bypass area ratio above 6.0 (e.g. 8.0-20), low pressure turbine sections involve ratios of airfoil count to bypass area ratio above 190.

With the full range of selection of parameters discussed above including, disk bore thickness, disk material, hub to tip ratio, and R_{O}/R_{Tmax.}, the ratio of airfoil count to bypass area ratio may be below about 170 to as low as 10 (e.g., equal to or below about 150 or an exemplary about 10-170, more narrowly about 10-150, or above about 150 by implication). In some embodiments, the ratio of airfoil count to bypass area ratio is greater than or equal to about 100, such as between about 120 and 140, and the low pressure turbine section 27 has between three and four stages. In other embodiments, the ratio of airfoil count to bypass area ratio is less than 100, such as between about 15 and 80, and the low pressure turbine section 27 has between three and four stages. Further, in such embodiments the airfoil count may be below about 1700, or below about 1600 or below about 1000, such as about 300-800 airfoils, or more narrowly between about 350-750 airfoils.

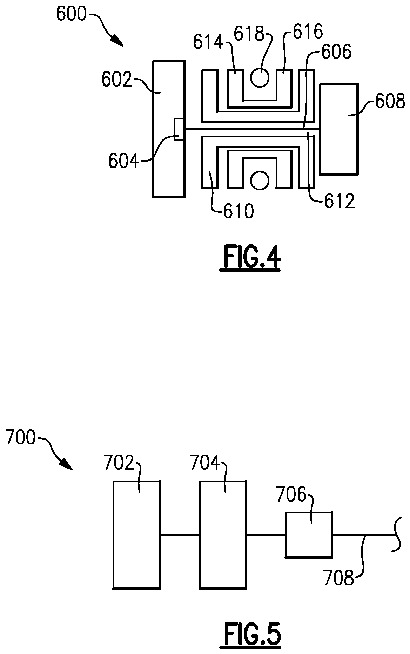

Figure 4 shows an embodiment 600, wherein there is a fan drive turbine 608 driving a shaft 606 to in turn drive a fan rotor 602. A gear reduction 604 may be positioned between the fan drive turbine 608 and the fan rotor 602. This gear reduction 604 may be structured and operate like the gear reduction disclosed above. A compressor rotor 610 is driven by an intermediate pressure turbine 612, and a second stage compressor rotor 614 is driven by a turbine rotor 216. A combustion section 618 is positioned intermediate the compressor rotor 614 and the turbine section 616.

Figure 5 shows a previously discussed embodiment 700 wherein a fan rotor 702 and a low pressure compressor section 704 rotate at a common speed. The gear reduction 706 (which may be structured as disclosed above) is intermediate the low pressure compressor section 704 and a shaft 708 which is driven by a low pressure turbine section.

One or more embodiments have been described. Nevertheless, it will be understood that various modifications may be made. For example, when reengineering from a baseline engine configuration, details of the baseline may influence details of any particular implementation. Accordingly, other embodiments are within the scope of the following claims.

## Claims

1. A turbofan engine comprising:
a fan including a circumferential array of fan blades;
a compressor in fluid communication with the fan, the compressor including a first compressor section and a second compressor section including four stages, the second compressor section including a greater number of stages than the first compressor section, the second compressor section including a second compressor section inlet with a second compressor section inlet annulus area;
a fan duct including a fan duct annulus area outboard of the second compressor section inlet, wherein the ratio of the fan duct annulus area to the second compressor section inlet annulus area defines a bypass area ratio that is greater than or equal to 8.0;
a combustor in fluid communication with the compressor;
a shaft assembly having a first portion and a second portion;
a turbine in fluid communication with the combustor, the turbine having a two-stage first turbine section coupled to the first portion of the shaft assembly to drive the first compressor section, and a four-stage second turbine section coupled to the second portion of the shaft assembly to drive the fan, each of the second turbine section including blades and vanes, and a second turbine airfoil count defined as the numerical count of all of the blades and vanes in the second turbine section; and
an epicyclic transmission coupled to the fan and rotatable by the second turbine section through the second portion of the shaft assembly to allow the second turbine section to turn faster than the fan, wherein the second turbine airfoil count is below 1600, a ratio of the second turbine airfoil count to the bypass area ratio is less than 150, and the second turbine section further includes a maximum gas path radius and the fan blades include a maximum radius, and a ratio of the maximum gas path radius to the maximum radius of the fan blades is less than 0.6.

2. The turbofan engine as recited in claim 1, wherein the second turbine section is configured to drive the second compressor section via the epicyclic transmission.

3. The turbofan engine as recited in claim 1 or 2, further comprising a fan case and vanes, the fan case encircling the fan and supported by the vanes, optionally wherein the fan is a single fan, and each fan blade includes a platform and an outboard end having a free tip.

4. The turbofan engine as recited in any preceding claim, wherein the epicyclic transmission is a planetary gearbox having a speed reduction ratio between 2:1 and 13:1 determined by the ratio of diameters within the planetary gearbox.

5. The turbofan engine as recited in any preceding claim, wherein the ratio of the maximum gas path radius to the maximum radius of the fan blades is greater than 0.55.

6. The turbofan engine as recited in any preceding claim, further comprising:
an engine aft mount location configured to support an engine mount when the engine is mounted and react at least a thrust load of the engine; and
an engine forward mount location, optionally wherein the engine forward mount location is axially proximate to the epicyclic transmission, further optionally wherein the engine forward mount location engages with an intermediate case and/or with an engine thrust case.

7. The turbofan engine as recited in claim 6, wherein the engine aft mount location is located between the second turbine section and the first turbine section.

8. The turbofan engine as recited in any preceding claim, wherein the second turbine section includes a plurality of blade stages interspersed with a plurality of vane stages, and each stage of the second turbine section includes a disk with a circumferential array of blades, each blade including an airfoil extending from an inner diameter to an outer diameter, wherein the inner diameter is associated with a platform and the outer diameter is associated with a shroud, optionally wherein in at least one stage the shroud is integral with the airfoil.

9. The turbofan engine as recited in any of claims 1-7, wherein the second turbine section includes a plurality of blade stages interspersed with a plurality of vane stages, and each stage of the second turbine section includes a disk with a circumferential array of blades, each blade including an airfoil extending from an inner diameter to an outer diameter, wherein the inner diameter is associated with a platform and the outer diameter is unshrouded.

10. The turbofan engine as recited in claim 8 or 9, wherein the shroud includes outboard sealing ridges configured to seal with abradable seals, optionally wherein the abradable seals include honeycomb.

11. The turbofan engine as recited in claim 10, further comprising a case associated with the second turbine section, wherein the abradable seals are fixed to the case.

12. The turbofan engine as recited in any of claims 8 to 11, further comprising a stationary blade outer air seal, and a rotational gap between a tip of the airfoil and the stationary blade outer air seal.

13. The turbofan engine as recited in claim 12, wherein each of the plurality of vane stages includes a vane, each vane including an airfoil extending from an inner diameter to an outer diameter, wherein the inner diameter is associated with a platform and the outer diameter is associated with a shroud optionally further comprising a case associated with the second turbine section, wherein the shroud is fixed to the case.

14. The turbofan engine as recited in any preceding claim, wherein a hub-to-tip ratio (R*i*:R*o*) of the second turbine section is between 0.4 and 0.5 measured at the maximum Ro axial location in the second turbine section, optionally wherein the bypass area ratio is less than or equal to 20, the epicyclic transmission is a planetary gearbox having a speed reduction ratio between 2:1 and 13:1 determined by the ratio of diameters within the planetary gearbox, and the hub-to-tip ratio (R*i*:R*o*) is between 0.42-0.48.

15. The turbofan engine as recited in any preceding claim, wherein the ratio of the maximum gas path radius to the maximum radius of the fan blades is greater than 0.55, and the ratio of the second turbine airfoil count to the bypass area ratio is between 120 and 140.
